# EUROPEAN PATENT APPLICATION

(11) **EP 3 477 520 A1**
(43) Date of publication of application: **01.05.2019**
(21) Application number: 17198536.9
(22) Date of filing: 26.10.2017
(51) Int. Cl.: G06F 21/44, G06F 21/60, G08C 17/00, H04W 12/12

(54) **SECURE COMMUNICATION FOR INTEGRATED CIRCUITS**

(71) Applicant: Vestel Elektronik Sanayi ve Ticaret A.S., 45030 Manisa (TR)
(72) Inventor: Sariarslan, Muhammet Kürsat, 45030 Manisa (TR); Öcal, Ömür, 45030 Manisa (TR)
(74) Representative: Schmidt, Steffen J.

(57) **Abstract**

An integrated circuit (120) for transmitting data to another integrated circuit (140) in a secure communication. The integrated circuit (120) comprises an analog signal generator (122) configured to generate an analog signal corresponding to an encryption signal (200) for the other integrated circuit (140), and a transmitter (124) configured to transmit the generated analog signal to the other integrated circuit (140) to initiate the secure communication between the integrated circuit (120) and the other integrated circuit (140), and transmit the data in the form of digital signals to the other integrated circuit (140) via the secure communication.

## Description

### Technical Field

The present disclosure generally relates to the field of integrated circuits. More specifically, the present disclosure relates to integrated circuits for transmitting and receiving data in a secure communication and to methods for transmitting and receiving data between the integrated circuits in a secure communication.

### Background

Integrated circuits are nowadays used for a huge variety of applications for electronic devices. Typical electronic integrated circuits for an electronic device such as a TV, a laptop and a smartphone include, for example, logic gates, flip-flops, multiplexers, microprocessors, sensors, amplifiers and the like.

Generally, a large number of integrated circuits compose an electronic device together and each of them performs its own process respectively and also communicates with each other to conduct various functionalities of the electronic device. The integrated circuits may communicate with each other using various types of communication protocols, e.g., Serial Communication, Serial Peripheral Interface (SPI) and I²C. However, present communication protocols used among the integrated circuits may be maliciously controlled and thus even easily hacked by the third party, since those protocols utilize a digital communication structure, i.e., 0 and 1. In other words, in traditional communication protocols, simply writing digital codes would be enough to copy or change applications of electronic devices.

### Problem

It is thus an object of the present disclosure to provide an effective way for integrated circuits to transmit and receive data in a secure communication that avoids the above, or other, problems.

### Summary

According to a first aspect, a first integrated circuit for transmitting data to a second integrated circuit in a secure communication is provided. The first integrated circuit comprises an analog signal generator configured to generate an analog signal corresponding to an encryption signal for the second integrated circuit and a transmitter configured to transmit the generated analog signal to the second integrated circuit to initiate the secure communication between the first and second integrated circuits, and transmit the data in the form of digital signals to the second integrated circuit via the secure communication.

By way of example, but not limitation, an encryption signal may be a unique analog signal for a specific integrated circuit, and each of integrated circuits of an electronic device may thus be allocated with a corresponding unique analog signal as an encryption signal individually. In this regard, each of the first and second integrated circuits may have its own unique encryption signal in the form of an analog signal.

For preventing an encryption signal of an integrated circuit from easily being decrypted by the third party, the encryption signal may be in the form of a combined analog signal to raise its complexity. In order for the first integrated circuit to generate an encryption signal for the second integrated circuit which is in the form of a combined analog signal, the analog signal generator of the first integrated circuit may comprise at least two oscillators. Each of the at least two oscillators may be configured to generate different analog signals from each other in at least one of a shape, amplitude, phase or frequency.

When the at least two oscillators generate different analog signals, the analog signal generator may combine the at least two generated analog signals to be a single analog signal corresponding to an encryption signal for the second integrated circuit. Then, the transmitter of the first integrated circuit may transmit the combined analog signal to the second integrated circuit as an encryption signal for the second integrated circuit to establish and initiate the secure communication between the integrated circuits.

The second integrated circuit for receiving data from the first integrated circuit in a secure communication comprises a receiver configured to receive an analog signal, and the data in the form of digital signals from the first integrated circuit and an analyzer configured to analyze the received analog signal and determine whether the received analog signal corresponds to an encryption signal for the second integrated circuit.

The first integrated circuit may transmit the data in the form of digital signals along with the analog signal one after another to the second integrated circuit. Then, the receiver of the second integrated circuit may receive the analog signal as an encryption signal and the data in the form of digital signals one after another. By way of example, but not limitation, when the analog signal and the data in the form of digital signals are transmitted from the first integrated circuit to the second integrated circuit continuously, at least one bit may be transmitted along with the signals, which may indicate, e.g., which part of the transmitted signals corresponds to the analog signal as an encryption signal or to the digital signals as data. For example, one bit may indicate a start of transmission of the analog signal and another bit may indicate a stop of transmission of the analog signal.

When the analyzer of the second integrated circuit determines that the received analog signal corresponds to the encryption signal for the second integrated circuit, the second integrated circuit then may perform a process based at least in part on the data in the form of digital signals received from the first integrated circuit in the secure communication such that the first and second integrated circuits can conduct several functionalities of the electronic device. Furthermore, for example, the second integrated circuit may decide to continue to communicate with the first integrated circuit to transmit data to each other, since the communication with the first integrated circuit is verified as a secure communication. On the other hand, when the analyzer of the second integrated circuit determines that the received analog signal does not correspond to the encryption signal for the second integrated circuit, the second integrated circuit then may discard the received data and will not perform any process based on the received data which is regarded as transmitted via an insecure communication. In this way, it can be ensured that the integrated circuit will perform a process according to the received data from the other integrated circuit only when the communication between the integrated circuits is verified as a secure communication. Thereby, the communication between the integrated circuits will not be maliciously controlled by the third party who tries to hack applications of the electronic device by simply using digital codes.

By way of example, but not limitation, the analog signal and the data in the form of digital signals may be transmitted from the first integrated circuit to the second integrated circuit separately at an interval of time. For example, after the second integrated circuit determines that the received analog signal corresponds to the encryption signal for the second integrated circuit, the second integrated circuit may transmit an acknowledge signal to the first integrated circuit, which indicates that the second integrated circuit is ready for receiving data in the form of digital signals. Then, the first integrated circuit may further transmit the data in the form of digital signals to the second integrated circuit and the second integrated circuit may utilize the transmitted data from the first integrated circuit. Even though the second integrated circuit receives the data from the first integrated circuit when the second integrated circuit does not respond to the first integrated circuit based on the determination that the received analog signal does not correspond to the encryption signal, the second integrated circuit may simply discard the received data and will not perform any process.

The second integrated circuit may further comprise a register configured to store signal information of the encryption signal for the second integrated circuit. As said, by way of example, but not limitation, an encryption signal may be a unique analog signal for a specific integrated circuit. The second integrated circuit may thus be allocated with a corresponding unique analog signal as an encryption signal and store the signal information of the encryption signal in the register. In other words, the signal information of the encryption signal may be stored as reference information in the register to be used by the analyzer of the second integrated circuit in determining whether the received analog signal from the first integrated circuit corresponds to the encryption signal allocated to the second integrated circuit.

An encryption signal may be in the form of a combined analog signal. The first integrated circuit may thus generate a combined analog signal corresponding to an encryption signal for the second integrated circuit and transmit the generated combined analog signal to the second integrated circuit. According to an aspect of an example embodiment, for analyzing the received combined analog signal to determine whether the received analog signal corresponds to the encryption signal for the second integrated circuit, the analyzer may split up the received analog signal into at least two analog signals. The analyzer may comprise a band-pass filter configured to filter the received analog signal to separate into at least two analog signals according to frequencies. The analyzer may further comprise an Analog to Digital Converter, ADC configured to measure signal information of the at least two analog signals separated by the band-pass filter. For example, the measured signal information may include information of at least one of a shape, amplitude, phase or frequency of the at least two separated analog signals.

The analyzer may further determine whether the measured signal information matches the signal information of the encryption signal. For example, the signal information of the encryption signal may include information of at least one of a shape, amplitude, phase or frequency of at least two analog signals which compose the encryption signal for the second integrated circuit. The analyzer may compare the signal information of the received analog signal measured by the ADC of the analyzer with the signal information of the encryption signal stored in the register. When the measured signal information matches the stored signal information from the comparison, the analyzer determines that the received analog signal corresponds to the encryption signal for the second integrated circuit. On the other hand, when the measured signal information does not match the stored signal information from the comparison, the analyzer determines that the received analog signal does not correspond to the encryption signal for the second integrated circuit.

According to another aspect of an example embodiment, as an alternative to splitting up the received analog signal into at least two analog signals and measuring signal information therefrom, the analyzer may use an inversion signal of the encryption signal for the second integrated circuit to determine whether the received analog signal corresponds to the encryption signal. The analyzer of the second integrated circuit may comprise an inversion signal generator configured to generate an inversion signal of the encryption signal for the second integrated circuit. By way of example, but not limitation, in order to generate the inversion signal of the encryption signal, the inversion signal generator may comprise at least two oscillators, each of which is configured to generate different analog signals. Then, the inversion signal generator may combine the at least two analog signals generated by the oscillators to be an inversion signal of the encryption signal for the second integrated circuit.

The analyzer may then add the generated inversion signal to the received analog signal and determine whether a sum of those two signals corresponds to approximately zero. It may be considered whether the result of the addition, i.e., the sum of the two signals is within an acceptable error range. This is because even if the two signals correspond to each other, the result may not be clearly zero, since during the transmission from the first integrated circuit to the second integrated circuit, the analog signal can be varied slightly in voltage due to, for example, the noise. When the sum corresponds to approximately zero, the analyzer determines that the received analog signal corresponds to the encryption signal for the second integrated circuit. On the other hand, when the sum does not correspond to zero, the analyzer determines that the received analog signal does not correspond to the encryption signal for the second integrated circuit.

By way of example, but not limitation, the integrated circuit may also transmit the generated analog signal as an encryption signal with the data in the form of digital signals to two or more integrated circuits simultaneously via a common communication line in the electronic device. As mentioned above, since an encryption signal may be a unique analog signal for a specific integrated circuit, only the integrated circuit which determines that the received analog signal corresponds to its unique encryption signal may respond to the integrated circuit transmitting the signals, whereby performing a process based on the data received from the integrated circuit. The other integrated circuits receiving the signals may discard the data based on the determination that the received analog signal does not correspond to their individual unique encryption signals.

As a further variant, the combined encryption signal is split up to two or more partial encryption signals, where the splitted partial encryption signals do not conform to the oscillators generated different analog signals. One such variant has signal portions that exceed a certain threshold amplitude being time / phase delayed and transmitted over a different channel than the signal portions below that threshold amplitude. On the receiving side, the signals on the channel below that threshold amplitude are time / phase delayed and combined to the signal portions above that threshold amplitude. The combined encryption signal is the subjected to the analyzing / decryption step.

According to a second aspect, methods for transmitting and receiving data among integrate circuits are provided. The methods may be performed by the integrated circuits according to the first aspect. All apparatus features described herein with reference to the first aspect may thus also be embodied as functions, services or steps in the methods of the second aspect.

### Brief Description of the Drawings

In the following, the present disclosure will further be described with reference to exemplary implementations illustrated in the figures, in which:
- Figure 1: schematically illustrates a modular composition of an electronic device incorporating integrated circuits communicating with each other according to the present disclosure;
- Figure 2: schematically illustrates an example of a combined analog signal which may be used as an encryption signal by the integrated circuits of Figure 1; and
- Figure 3: schematically illustrates a flowchart of a method which may be performed by the integrated circuits of Figure 1.

### Detailed Description

In the following description, for purposes of explanation and not limitation, specific details are set forth in order to provide a thorough understanding of the present disclosure. It will be apparent to one skilled in the art that the present disclosure may be practiced in other implementations that depart from these specific details.

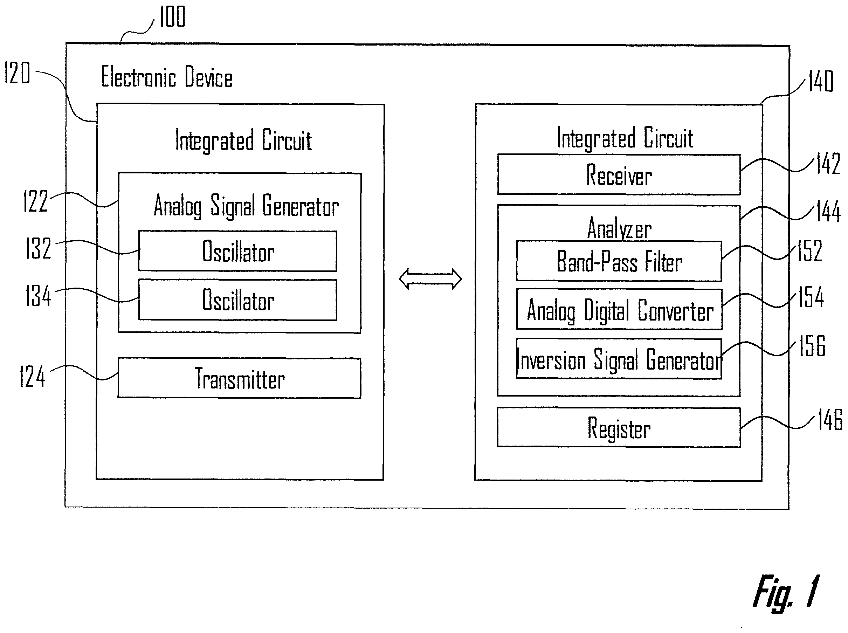

Figure 1 schematically illustrates an exemplary composition of an electronic device 100 incorporating integrated circuits 120, 140 that communicate with each other. It will be understood that the integrated circuits 120, 140 may be any integrated circuit, for example but not limited to, logic gates, flip-flops, multiplexers, microprocessors, sensors, and audio amplifiers. The electronic device may be any type of electronic devices such as TVs, laptops, smartphones, set-top boxes, a hybrid of the aforementioned devices, or the like.

In figure 1, although illustrated as the integrated circuit 120 may transmit data to the integrated circuit 140, and the integrated circuit 140 may receive data from the integrated circuit 120, it will be understood by those skilled in the art that at least one of the integrated circuits 120, 140 may further comprise at least one of the components of the counterpart such that the integrated circuits 120, 140 can transmit data to each other in the communication.

The integrated circuit 120 may have data in the form of digital signals to transmit to the integrated circuit 140 to perform several functionalities of the electronic device 100. In order to establish and initiate a secure communication between the integrated circuit 120 and the integrated circuit 140, the integrated circuit 120 may generate and transmit an analog signal as an encryption signal for the integrated circuit 140. By way of example, but not limitation, an encryption signal may be a unique analog signal for a specific integrated circuit, and each of the integrated circuits 120, 140 may thus be allocated with a corresponding unique analog signal as an encryption signal respectively. For this purpose, the integrated circuit 120 comprises an analog signal generator 122 configured to generate an analog signal corresponding to an encryption signal for the integrated circuit 140 and a transmitter 124 configured to transmit the generated analog signal to the integrated circuit 140 to communicate with the integrated circuit 140. The transmitter 124 of the integrated circuit 120 then may transmit the data in the form of digital signals to the integrated circuit 140. In one implementation, the transmitter 124 of the integrated circuit 120 may transmit the data in the form of digital signals along with the analog signal one after another to the integrated circuit 140.

The integrated circuit 140 comprises a receiver 142 configured to receive an analog signal and data in the form of digital signals from the integrated circuit 120 and an analyzer 144 configured to analyze the received analog signal and determine whether the received analog signal corresponds to an encryption signal for the integrated circuit 140. Based on the determination, the integrated circuit 140 may decide whether to communicate with the integrated circuit 120 or not.

By way of example, but not limitation, it may be assumed that the electronic device 100 is a TV set. A user of the TV set, i.e., the electronic device 100, may send an input, for example, a command "volume up" to the TV set in order to increase an audio volume of the TV set. In this procedure, for example, a microcontroller of the TV set corresponding to the integrated circuit 120 may receive the command and have data related to the command "volume up" for an audio amplifier of the TV set corresponding to the integrated circuit 140. Then, the analog signal generator 122 of the microcontroller may generate an analog signal corresponding to an encryption signal for the audio amplifier and the transmitter 124 of the microcontroller may transmit the generated analog signal with the data in the form of digital signals to the audio amplifier. The receiver 142 of the audio amplifier may receive the analog signal and the data from the microcontroller. The analyzer 144 of the audio amplifier may then analyze the received analog signal to determine that the received analog signal corresponds to the encryption signal of the audio amplifier. When it is determined that the received analog signal corresponds to the encryption signal for the audio amplifier, it is guaranteed that the data in the form of digital signals is transmitted via a secure communication. The audio amplifier may thus perform the "volume up" process based on the data transmitted via the secure communication.

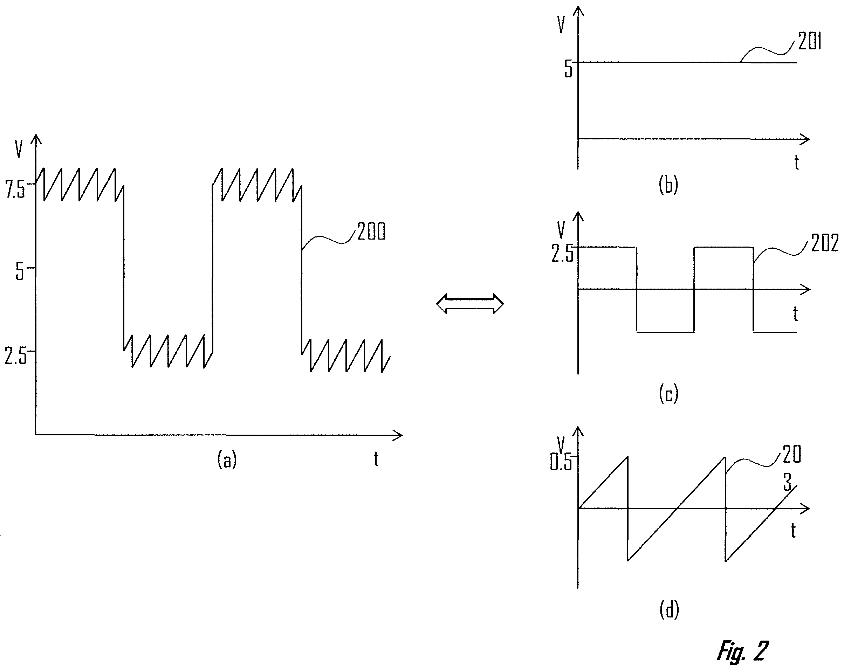

Regarding the encryption signal for the integrated circuit 140, for preventing the encryption signal from easily being decrypted by the third party, the encryption signal may be in the form of a combined analog signal to raise its complexity. For this purpose, the analog signal generator 122 of the integrated circuit 120 comprises at least two oscillators 132, 134. Each of the oscillators 132, 134 may generate different analog signals from each other in at least one of a shape, amplitude, phase or frequency. The analog signal generator 122 may combine the at least two analog signals generated by the oscillators 132, 134 to be an analog signal corresponding to an encryption signal for the integrated circuit 140. Then, the transmitter 124 may transmit the combined analog signal to the integrated circuit 140 as an encryption signal. More detailed descriptions relating to the combined analog signal will be provided with regard to Figure 2 below.

The receiver 142 of the integrated circuit 140 may receive the combined analog signal and the data from the integrated circuit 120. For analyzing the received combined analog signal, according to an aspect of an example embodiment, the analyzer 144 of the integrated circuit 140 comprises a band-pass filter 152 configured to filter the received analog signal to separate into at least two analog signals according to frequencies and an Analog to Digital Converter, ADC 154 configured to measure signal information of the at least two analog signals separated by the band-pass filter 152. For example, the measured signal information may include information of at least one of a shape, amplitude, phase or frequency of the at least two separated analog signals.

The analyzer 144 may further determine whether the measured signal information matches signal information of the encryption signal for the integrated circuit 140. For this purpose, the integrated circuit 140 further comprises a register 146 configured to store the signal information of the encryption signal. For example, the signal information of the encryption signal may also include information of at least one of a shape, amplitude, phase or frequency of at least two analog signals which compose the encryption signal for the integrated circuit 140. The analyzer 144 may compare the signal information of the received analog signal measured by the ADC 154 of the analyzer 144 with the signal information of the encryption signal stored in the register 146. When the measured signal information matches the stored signal information from the comparison, the analyzer 144 determines that the received analog signal corresponds to the encryption signal for the integrated circuit 140. On the other hand, when the measured signal information does not match the stored signal information from the comparison, the analyzer 144 determines that the received analog signal does not correspond to the encryption signal for the integrated circuit 140.

Meanwhile, according to another aspect of an example embodiment, in order to analyze the received analog signal, the analyzer 144 may use an inversion signal of the encryption signal for the integrated circuit 140 alternately. For this purpose, the analyzer 144 of the integrated circuit 140 comprises an inversion signal generator 156 configured to generate an inversion signal of the encryption signal for the integrated circuit 140. The analyzer 144 may then add the generated inversion signal to the received analog signal and determine whether a sum of those two signals corresponds to approximately zero. When the sum corresponds to approximately zero, the analyzer 144 determines that the received analog signal corresponds to the encryption signal for the integrated circuit 140. On the other hand, when the sum does not correspond to zero, the analyzer 144 determines that the received analog signal does not correspond to the encryption signal for the integrated circuit 140.

When the analyzer 144 determines that the received analog signal corresponds to the encryption signal for the integrated circuit 140, the integrated circuit 140 then may perform a process based at least in part on the data in the form of digital signals received from the integrated circuit 120 such that the integrated circuits 120, 140 can conduct several functionalities of the electronic device 100. Furthermore, for example, the integrated circuit 140 may decide to continue to communicate with the integrated circuit 120 to transmit data to each other, since the communication with the integrated circuit 120 is verified as a secure communication. However, when the analyzer 144 determines that the received analog signal does not correspond to the encryption signal for the integrated circuit 140, the integrated circuit 140 then may discard the received data and will not perform any process based on the received data which is regarded as transmitted via an insecure communication.

Figure 2 illustrates schematically illustrates an example of a combined analog signal 200 which may be used as an encryption signal by the integrated circuits 120, 140. Figure 2(a) illustrates the exemplified combined analog signal 200, and Figures 2(b), (c) and (d) illustrate examples of analog signals 201, 202, 203 respectively, which may compose the combined analog signal 200.

For example, as illustrated in Figure 2, the analog signal 201 is a type of a DC voltage which has amplitude of 5V. The analog signal 202 is a type of a square wave which has amplitude of 2.5V and a frequency of 1kHz. The analog signal 203 is a type of a saw tooth wave which has amplitude of 0.5V and a frequency of 10kHz. The oscillators 132, 134 of the analog signal generator 122 may generate the analog signals 201, 202, 203 and the analog signal generator 122 of the integrated circuit 120 may combine the analog signals 201, 202, 203 to generate the combined analog signal 200 corresponding to an encryption signal for the integrated circuit 140. The transmitter 124 of the integrated circuit 120 may then transmit the combined analog signal 200 to the integrated circuit 140 as an encryption signal.

In turn, when the receiver 142 of the integrated circuit 140 receives the combined analog signal 200 from the integrated circuit 120, in one implementation, the band-pass filter 152 of the analyzer 144 may filter the combined analog signal 200 to separate into the analog signals 201, 202, 203 according to frequencies. The ADC 154 may then measure signal information of the separated analog signals 201, 202, 203 such as a frequency, amplitude and the like to compare with signal information of the encryption signal for the integrated circuit 140. In another implementation, the inversion signal generator 156 of the analyzer 144 may generate an inversion signal of the encryption signal for the integrated circuit 140 and add the received analog signal, i.e., the combined analog signal 200, to the generated inversion signal to determine a sum of the addition corresponds to approximately zero.

One skilled in the art would appreciate that types of the signal information or the number of the illustrated analog signals are non-limiting example and any other number or information of the analog signals to implement the analog signal generation scheme in accordance with embodiments described here will be available.

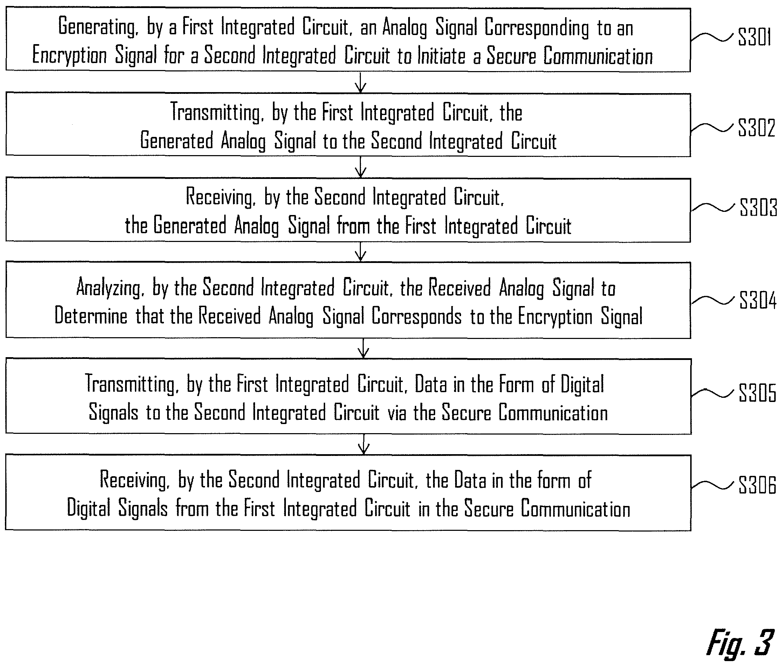

Figure 3 schematically illustrates a flowchart of a method for transmitting and receiving data between integrated circuits, i.e., in the present example the integrated circuits 120, 140 in a secure communication. The method begins at step S301, at which a first integrated circuit generates an analog signal corresponding to an encryption signal for a second integrated circuit to initiate a secure communication. In step S302, the first integrated circuit transmits the generated analog signal to the second integrated circuit and, in step S303, the second integrated circuit receives the generated analog signal from the first integrated circuit. Thereafter, in step S304, the second integrated circuit analyzes the received analog signal to determine that the received analog signal corresponds to the encryption signal. In step S305, the first integrated circuit transmits data in the form of digital signals to the second integrated circuit via the secure communication and, in step S306, the second integrated circuit receives the data in the form of digital signals from the first integrated circuit in the secure communication.

Regarding the steps S302 and S305, the first integrated circuit may transmit the data in the form of digital signals along with the analog signal one after another to the second integrated circuit. On the other hand, by way of example, but not limitation, the analog signal and the data in the form of digital signals may be rather transmitted separately from the first integrated circuit to the second integrated circuit at an interval of time.

The above-described variants as well as their design and operating aspects serve only for the better understanding of the structure, the functionality, and the features; they have no limiting effect upon the disclosure, for example to the design examples. The figures are partially schematic, with essential features and functions being shown sometimes considerably enlarged in order to illustrate functions, effects, technical designs, and features. Here, each functionality, each principle, each technical feature, and each characteristic disclosed in the figures or the text can be combined with all claims, all features in the text, and in the other figures, other functionalities, principles, technical designs, and features included in this disclosure or resulting therefrom, in a free and arbitrary fashion such that all possible combinations of the described variants shall be included, here.

Here, combinations between all individual designs in the text are also possible; this means in every section of the description, in the claims, and also combinations between different variants in the text, in the claims and the figures. The claims shall also not be considered limited to their disclosure and thus shall not exclude any potential combinations of all features shown. All disclosed features are explicitly also disclosed individually and in combination with all other characteristics.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. An integrated circuit (120) for transmitting data to another integrated circuit (140) in a secure communication, comprising:
an analog signal generator (122) configured to generate an analog signal corresponding to an encryption signal (200) for the other integrated circuit (140); and
a transmitter (124) configured to:
transmit the generated analog signal to the other integrated circuit (140) to initiate the secure communication between the integrated circuit (120) and the other integrated circuit (140), and
transmit the data in the form of digital signals to the other integrated circuit (140) via the secure communication.

2. The integrated circuit (120) of claim 1, wherein the analog signal generator (122) comprises at least two oscillators (132, 134), each of which is configured to generate different analog signals (201, 202, 203), from each other in at least one of a shape, amplitude, phase or frequency.

3. The integrated circuit (120) of claim 2, wherein the analog signal generator (122) is further configured to combine the at least two generated analog signals to be the analog signal corresponding to the encryption signal (200) for the other integrated circuit (140).

4. The integrated circuit (120) of any one of claim 1 to 3, wherein the transmitter (124) is further configured to transmit the data in the form of digital signals along with the analog signal one after another to the other integrated circuit (140).

5. An integrated circuit (140) for receiving data from another integrated circuit (120) in a secure communication, comprising:
a receiver (142) configured to receive an analog signal, and the data in the form of digital signals from the other integrated circuit (120); and
an analyzer (144) configured to analyze the received analog signal and determine whether the received analog signal corresponds to an encryption signal (200) for the integrated circuit (140).

6. The integrated circuit (140) of claim 5, further comprising a register (146) configured to store signal information of the encryption signal (200) for the integrated circuit (140).

7. The integrated circuit (140) of claim 6, wherein the analyzer (144) comprises:
a band-pass filter (152) configured to filter the received analog signal to separate into at least two analog signals according to frequencies; and
an Analog to Digital Converter, ADC (154), configured to measure signal information of the at least two separated analog signals.

8. The integrated circuit (140) of claim 7, wherein the analyzer (144) is further configured to determine whether the measured signal information matches the signal information of the encryption signal (200) stored in the register (146).

9. The integrated circuit (140) of claim 5, wherein the analyzer (144) comprises an inversion signal generator (156) configured to generate an inversion signal of the encryption signal (200) for the integrated circuit (120),
wherein the analyzer (144) is further configured to determine whether a sum of the received analog signal and the generated inversion signal of the encryption signal (200) corresponds to approximately zero.

10. The integrated circuit (140) of claim 5, wherein if it is determined that the received analog signal corresponds to the encryption signal (200) for the integrated circuit (140), the integrated circuit performs a process based at least in part on the data in the form of digital signals received from the other integrated circuit (120), and
wherein if it is determined that the received analog signal does not correspond to the encryption signal (200) for the integrated circuit (140), the integrated circuit (140) discards the data in the form of digital signals received from the other integrated circuit (120).

11. A method performed in an integrated circuit (120) for transmitting data to another integrated circuit (140) in a secure communication, comprising:
generating (S301) an analog signal corresponding to an encryption signal (200) for the other integrated circuit (140);
transmitting (S302) the generated analog signal to the other integrated circuit (140) to initiate the secure communication between the integrated circuit (120) and the other integrated circuit (140); and
transmitting (S305) the data in the form of digital signals to the other integrated circuit (140) via the secure communication.

12. A method performed in an integrated circuit (140) for receiving data from another integrated circuit (120) in a secure communication, comprising:
receiving (S303) an analog signal from the other integrated circuit (120);
analyzing (S304) the received analog signal to determine whether the received analog signal corresponds to an encryption signal (200) for the integrated circuit (140); and
receiving the data (S306) in the form of digital signals from the other integrated circuit (120) in the secure communication.

13. The method of claim 12, wherein the analyzing comprises:
band-pass filtering the received analog signal to separate into at least two analog signals according to frequencies;
measuring signal information of the at least two separated analog signals; and
determining whether the measured signal information matches signal information of the encryption signal (200) for the integrated circuit (140).

14. The method of claim 12, wherein the analyzing comprises:
generating an inversion signal of the encryption signal (200) for the integrated circuit (140); and
determining whether a sum of the received analog signal and the generated inversion signal corresponds to approximately zero.

## Amended claims

### Amended claims in accordance with Rule 137(2) EPC.

1. An integrated circuit (120) for transmitting data to another integrated circuit (140) in a secure communication, comprising:
an analog signal generator (122) configured to generate an analog signal corresponding to an encryption signal (200) in the form of an analog signal for the other integrated circuit (140); and
a transmitter (124) configured to:
transmit the generated analog signal to the other integrated circuit (140) to initiate the secure communication between the integrated circuit (120) and the other integrated circuit (140), and
transmit the data in the form of digital signals along with the analog signal one after another to the other integrated circuit (140) via the secure communication.

2. The integrated circuit (120) of claim 1, wherein the analog signal generator (122) comprises at least two oscillators (132, 134), each of which is configured to generate different analog signals (201, 202, 203), from each other in at least one of a shape, amplitude, phase or frequency.

3. The integrated circuit (120) of claim 2, wherein the analog signal generator (122) is further configured to combine the at least two generated analog signals to be the analog signal corresponding to the encryption signal (200) for the other integrated circuit (140).

4. An integrated circuit (140) for receiving data from another integrated circuit (120) in a secure communication, comprising:
a receiver (142) configured to receive an analog signal, and the data in the form of digital signals from the other integrated circuit (120); and
an analyzer (144) configured to analyze the received analog signal and determine whether the received analog signal corresponds to an encryption signal (200) in the form of an analog signal for the integrated circuit (140).

5. The integrated circuit (140) of claim 4, further comprising a register (146) configured to store signal information of the encryption signal (200) for the integrated circuit (140).

6. The integrated circuit (140) of claim 5, wherein the analyzer (144) comprises:
a band-pass filter (152) configured to filter the received analog signal to separate into at least two analog signals according to frequencies; and
an Analog to Digital Converter, ADC (154), configured to measure signal information of the at least two separated analog signals.

7. The integrated circuit (140) of claim 6, wherein the analyzer (144) is further configured to determine whether the measured signal information matches the signal information of the encryption signal (200) stored in the register (146).

8. The integrated circuit (140) of claim 4, wherein the analyzer (144) comprises an inversion signal generator (156) configured to generate an inversion signal of the encryption signal (200) for the integrated circuit (120),
wherein the analyzer (144) is further configured to determine whether a sum of the received analog signal and the generated inversion signal of the encryption signal (200) corresponds to approximately zero.

9. The integrated circuit (140) of claim 4, wherein if it is determined that the received analog signal corresponds to the encryption signal (200) for the integrated circuit (140), the integrated circuit performs a process based at least in part on the data in the form of digital signals received from the other integrated circuit (120), and
wherein if it is determined that the received analog signal does not correspond to the encryption signal (200) for the integrated circuit (140), the integrated circuit (140) discards the data in the form of digital signals received from the other integrated circuit (120).

10. A method performed in an integrated circuit (120) for transmitting data to another integrated circuit (140) in a secure communication, comprising:
generating (S301) an analog signal corresponding to an encryption signal (200) in the form of an analog signal for the other integrated circuit (140);
transmitting (S302) the generated analog signal to the other integrated circuit (140) to initiate the secure communication between the integrated circuit (120) and the other integrated circuit (140); and
transmitting (S305) the data in the form of digital signals along with the analog signal one after another to the other integrated circuit (140) via the secure communication.

11. A method performed in an integrated circuit (140) for receiving data from another integrated circuit (120) in a secure communication, comprising:
receiving (S303) an analog signal from the other integrated circuit (120);
analyzing (S304) the received analog signal to determine whether the received analog signal corresponds to an encryption signal (200) in the form of an analog signal for the integrated circuit (140); and
receiving the data (S306) in the form of digital signals from the other integrated circuit (120) in the secure communication.

12. The method of claim 11, wherein the analyzing comprises:
band-pass filtering the received analog signal to separate into at least two analog signals according to frequencies;
measuring signal information of the at least two separated analog signals; and
determining whether the measured signal information matches signal information of the encryption signal (200) for the integrated circuit (140).

13. The method of claim 11, wherein the analyzing comprises:
generating an inversion signal of the encryption signal (200) for the integrated circuit (140); and
determining whether a sum of the received analog signal and the generated inversion signal corresponds to approximately zero.
